# EUROPÄISCHE PATENTSCHRIFT

(11) **EP 3 849 319 B1**
(45) Veröffentlichungstag und Bekanntmachung des Hinweises auf die Patenterteilung: **05.07.2023**
(21) Anmeldenummer: 19772972.6
(22) Anmeldetag: 11.09.2019
(51) Int. Cl.: A21C 7/04

(54) **HYGIENISCHE RUNDWIRKEINRICHTUNG FÜR BACKWARENERZEUGUNG**
HYGIENIC ROUNDING DEVICE FOR THE PRODUCTION OF BAKERY PRODUCTS
DISPOSITIF D'ARRONDISSEMENT HYGIENIQUE POUR LA FABRICATION DE PRODUITS DE BOULANGERIE

(30) Priorität: 11.09.2018 AT 507722018
(43) Veröffentlichungstag der Anmeldung: 21.07.2021
(73) Patentinhaber: KÖNIG MASCHINEN GESELLSCHAFT M.B.H., 8045 Graz (AT)
(72) Erfinder: RAUCH, Eduard, 8321 St. Margarethen (AT); HIERZENBERGER, Johannes, 8715 St.Margarethen bei Knittelfeld (AT)
(74) Vertreter: Wildhack & Jellinek
(86) Internationale Anmeldenummer: PCT/AT2019/060295
(87) Internationale Veröffentlichungsnummer: WO 2020/051612

(56) Entgegenhaltungen:
- EP-A1- 1 306 009
- DE-C- 500 274
- JP-A- 2006 304 664
- JP-A- 2009 278 934
- US-A- 4 584 203

## Beschreibung

Die vorliegende Erfindung betrifft eine Vorrichtung zum Rundwirken von Teigstücken gemäß dem Oberbegriff des Patentanspruchs 1.

Aus dem Stand der Technik ist eine Vielzahl von Rundwirkvorrichtungen bekannt, die für die Produktion von Gebäcken und Brötchen unumgänglich sind. Die aus dem Stand der Technik bekannten Vorrichtungen sind beispielsweise Tellerwirkmaschinen oder Anlagen, in denen mittels Roboter nach Gewicht vorportionierte Teigstücke zu einem runden Ball gewirkt werden. Durch das Wirken der Teigstücke wird erreicht, dass die Teiglinge nach dem Wirken eine Spannung aufweisen, die einem mit leichtem Druck gefüllten Ball ähnelt, diese Spannung wird als Kernspannung bezeichnet. Die Spannung der Teiglinge ist dabei für die Porung, den Geschmack und das Aussehen des fertigen, gebackenen Teigstücks entscheidend. Dokument EP1306009 A1 offenbart eine Vorrichtung zum Rundwirken von Teigstücken nach dem Stand der Technik.

Nachteil der aus dem Stand der Technik bekannten Systeme ist, dass diese schwer oder nur mit großem Aufwand reinigbar sind und daher den ständig steigenden, hygienischen Anforderungen oft nicht gerecht werden. Die aus dem Stand der Technik bekannten Vorrichtungen weisen ebenso eine große Ausbildung bzw. Abmessungen auf, die große Bauräume erfordern. Weiters erlauben die aus dem Stand der Technik bekannten Anlagen jeweils nur eine Produktion eines spezifischen Teigstücks bzw. die Verarbeitung eines spezifischen Teiges und sind daher in der Produktion vieler unterschiedlicher Teige und Teigstücke ineffizient.

Ziel der Erfindung ist es daher, eine Wirkvorrichtung zum Rundwirken von Teigstücken bereitzustellen, mit der eine große Bandbreite von Teigen und Teiggewichten produziert und bearbeitet werden kann und welche im Hinblick auf die Anzahl der simultan produzierten Teigstücke eine große Flexibilität erlaubt. Weiters ist es Aufgabe, die Reinigung der Vorrichtung zu vereinfachen und dadurch höhere hygienische Standards einzuhalten.

Diese Aufgaben werden durch die kennzeichnenden Merkmale des Anspruchs 1 gelöst.

Die Erfindung ist eine Vorrichtung gemäß Anspruch 1.

Dabei ist vorgesehen, dass der Wirkschlitten fliegend an dem Stellschlitten gelagert ist, und dass der Stellschlitten und der Wirktisch und das Wirkband in und/oder an dem Rahmen derart einseitig fliegend in Transportrichtung des Wirkbandes neben dem Wirktisch befestigt, angeordnet und/oder gelagert sind, dass der Wirkschlitten, der Wirktisch und das Wirkband eine dem Rahmen gegenüberliegende Bedienseite aufweisen, die frei vom Rahmen und Lagerungen ist und sodass der Wirktisch und das Wirkband und der Wirkschlitten an der Bedienseite für Bedienpersonal frei zugänglich ist.

Als "einseitig bzw. fliegend gelagert" wird im Zusammenhang mit der Erfindung verstanden, dass die Lagerungen und Befestigungen der fliegend, einseitig gelagerten Teile nur an einer Seite der Vorrichtung in Bezug auf die Transportrichtung der Teigstücke neben den Transportvorrichtungen bzw. dem Wirkband angeordnet sind, sodass der Wirktisch, der Wirkschlitten und gegebenenfalls andere Teile der Vorrichtung von dem Rahmen abstehen bzw. auskragen.

Durch die fliegende bzw. einseitige Lagerung des Wirkschlittens, des Wirktischs und des Wirkbands bzw. des Stellschlittens ermöglicht, dass eine Seite neben dem Wirkband, die als Bedienseite bezeichnet wird, frei von Anlagenteilen ist und somit für das Bedienpersonal frei zugänglich ist. Dies erlaubt weiters die einfache Montage bzw. den einfachen Austausch von einzelnen Teilen der Vorrichtung, wodurch diese beispielsweise einfach in der Anzahl von Wirkwerkzeugen umgerüstet werden kann. Weiters erlaubt die einseitige Lagerung der Komponenten, die Vorrichtung einfach zu reinigen, da die mit Teig, Mehl und Wasser beaufschlagten Teile frei zugänglich sind. So sind beispielsweise der Wirktisch, der Wirkschlitten und das Wirkband einfach zugänglich und ebenfalls an der Bedienseite keine Lagerungen bzw. mechanische Teile angeordnet sind, die durch den Betrieb der Vorrichtung verschmutzt werden.

Besonders vorteilhafte Ausführungsformen der Vorrichtung werden durch die Merkmale der abhängigen Ansprüche näher definiert:
Eine Kontamination der Maschinenteile durch Mehl, Teigreste oder Wasser wird weiters besser verhindert, indem der Rahmen, insbesondere mittels einer, vorzugsweise aufklappbaren, Schutzverkleidung, derart ausgebildet ist, dass der Stellschlitten zum Wirktisch und dem Wirkband abgeschlossen, insbesondere abgedichtet, ist, sodass Schmutz, Mehl und/oder Wasser nicht vom Wirkband zum Stellschlitten und keine Fremdkörper auf die Produkte gelangen können. So werden einerseits die Maschinenteile bzw. Lagerungen und Antriebe der Vorrichtung durch die Schutzverkleidung vor Verschmutzung durch Teigreste, Wasser und Mehl geschützt, aber auch die Teige vor Verunreinigungen durch Fette oder Abrieb, der in den Antrieben der Vorrichtung entsteht, getrennt und dadurch eine höhere hygienische Produktion von Teiglingen gewährleistet.

Eine Verschmutzung der Vorrichtung bzw. der Teiglinge kann besonders effektiv verhindert werden, indem der Wirkschlitten aus dem Rahmen herausragt und dass die Öffnung des Rahmens, an der der Wirkschlitten aus dem Rahmen ragt mit einer Dichteinheit abgedeckt ist, wobei die Dichteinheit insbesondere als Gleitplatte oder Teleskopgleitplatte oder als geführtes Band oder als Zippverschluß oder als kolbenstangenloser Pneumatikzylinder ausgebildet ist.

Besonders vorteilhaft kann vorgesehen sein, dass die Vorrichtung eine Anzahl von Umlenkrollen aufweist um die das Wirkband geführt ist, dass die Umlenkrollen in und/oder an dem Rahmen einseitig fliegend in Transportrichtung des Wirkbandes angeordnet und/oder gelagert sind, wobei der Abstand zwischen den Umlenkrollen derart mittels einer Schnellspannvorrichtung veränderbar ist, dass das Wirkband gespannt oder entspannt werden kann. Durch die Anordnung der Umlenkrollen mit einem veränderbaren Abstand zueinander mittels der Spannvorrichtung ist es möglich, das Wirkband einfach zu entspannen und durch die einseitige Ausbildung der Lagerung der Umlenkrollen und des Wirktischs das Wirkband von dem Wirktisch bzw. den Umlenkrollen herunterzuziehen. Dies hilft dabei beispielsweise beim Wechsel der Produkte oder bei der Reinigung einfach handhaben bzw. austauschen zu können.

Bevorzugt kann vorgesehen sein, dass die Schnellspannvorrichtung einen Kniehebel aufweist, wobei der Kniehebel einen Spannhebel aufweist mit dem der Kniehebel gebeugt oder gestreckt werden kann, wobei der Spannhebel insbesondere derart angeordnet ist, dass dieser von der Bedienseite manuell betätigbar ist, wobei der Spannhebel derart ausgebildet ist, dass mittels der Schnellentspannvorrichtung das Wechseln von unterschiedlichen Wirkbänder für die unterschiedliche Produkte, Teiggewichte, Teilungen und Reihigkeiten ohne Werkzeug möglich ist. Durch die Ausbildung der Spannvorrichtung mit einem Kniehebel ist es einfach möglich, die Spannung des Wirkbandes von der Bedienseite her zu verändern bzw. dieses zu entspannen und das Wirkband einfach von dem Wirktisch und den Umlenkrollen herabzunehmen.

Eine bevorzugt stabile Ausführung der Vorrichtung sieht vor, dass die Vorrichtung eine Kugelspindel, einen Linearantriebs, Ketten- und/oder Riementrieb aufweist mit dem der Stellschlitten entlang der Transportrichtung des Wirkbandes vestellbar ist. So wird beispielsweise durch eine Kugelspindel oder die Verwendung eines Linearantriebs eine möglichst schwingungssteife Ausbildung der Verstellung des Stellschlittens erreicht. Dadurch werden wiederum auch die Kräfte, die beim Wirkvorgang auf den Wirkschlitten wirken, einfach auf den Rahmen übertragen und ein gleichmäßiger und ein hoch präziser, spielarmer Antrieb des Wirkschlittens erreicht.

Um die Verfahrgeschwindigkeit des Wirkschlittens bzw. des Stellschlittens besonders effektiv an die Transportgeschwindigkeit des Wirkbands anzupassen, kann vorgesehen sein, dass die Vorrichtung eine Synchronisiereinheit aufweist mit der die Verfahrgeschwindigkeit des Stellschlittens und/oder des Wirkschlittens an die Transportgeschwindigkeit des Wirkbandes angleichbar ist.

Eine größere Vielfalt in der Bearbeitung von Teiglingen bzw. in deren Anzahl kann erreicht werden, indem die Wirkwerkzeuge wechselbar am Wirkkopf angeordnet sind.

Besonders vorteilhaft kann vorgesehen sein, dass die Vorrichtung eine Anzahl von Wirkwerkzeugen, insbesondere Wirkbecher, aufweist, wobei die Wirkwerkzeuge in einer Anzahl von Reihen angeordnet sind, wobei in den Reihen jeweils eine Anzahl von Wirkwerkzeugen quer zur Transportrichtung des Wirkbandes nebeneinander angeordnet sind.

Um den Synchronlauf des Wirkbandes mit dem Wirkkopf bei der Verwendung unterschiedlicher Wirkbänder zu verbessern und die Produzierten Produkte einfach wechseln zu können, kann vorgesehen sein, dass unterschiedliche Wirkbänder für einzelne Anwendungen breitegestellt werden, wobei mit, in oder auf den Wirkbändern angeordneten, Indikatoren Signale an die Sensoren weitergeben werden, um den Synchronlauf des darüber befindlichen Wirkkopfes mit dem jeweiligen Wirkband zu gewährleisten.

Weitere Vorteile und Ausgestaltungen der Erfindung ergeben sich aus der Beschreibung und den beiliegenden Zeichnungen.

Die Erfindung ist im Folgenden anhand von besonders vorteilhaften aber nicht einschränkend zu verstehenden Ausführungsbeispielen in den Zeichnungen schematisch dargestellt und wird unter Bezugnahme auf die Zeichnungen beispielhaft beschrieben:

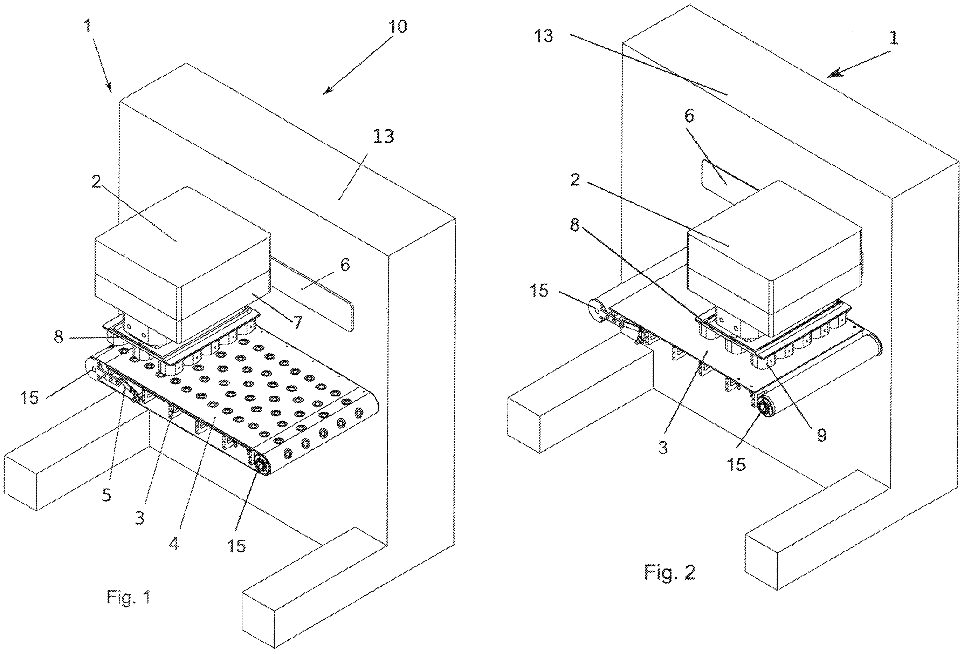

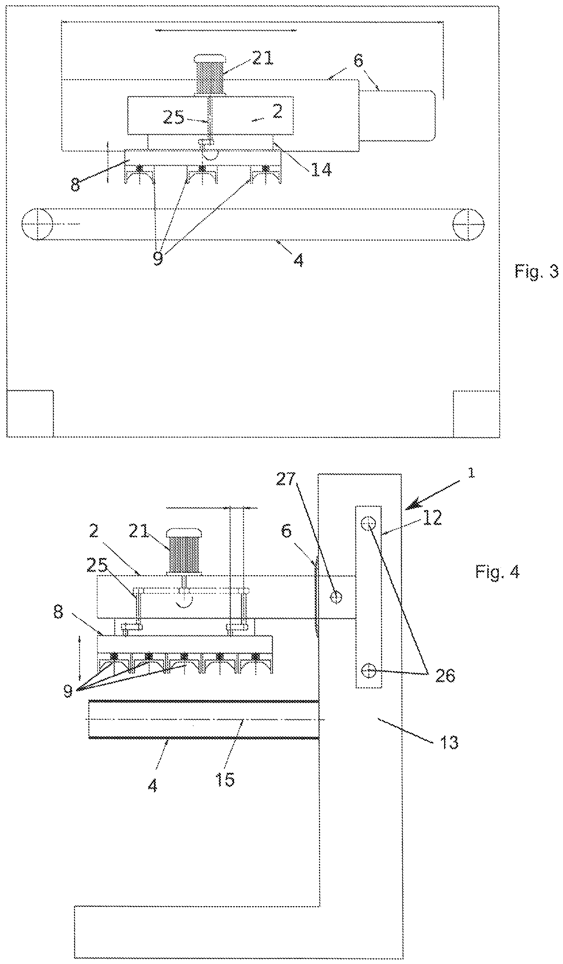

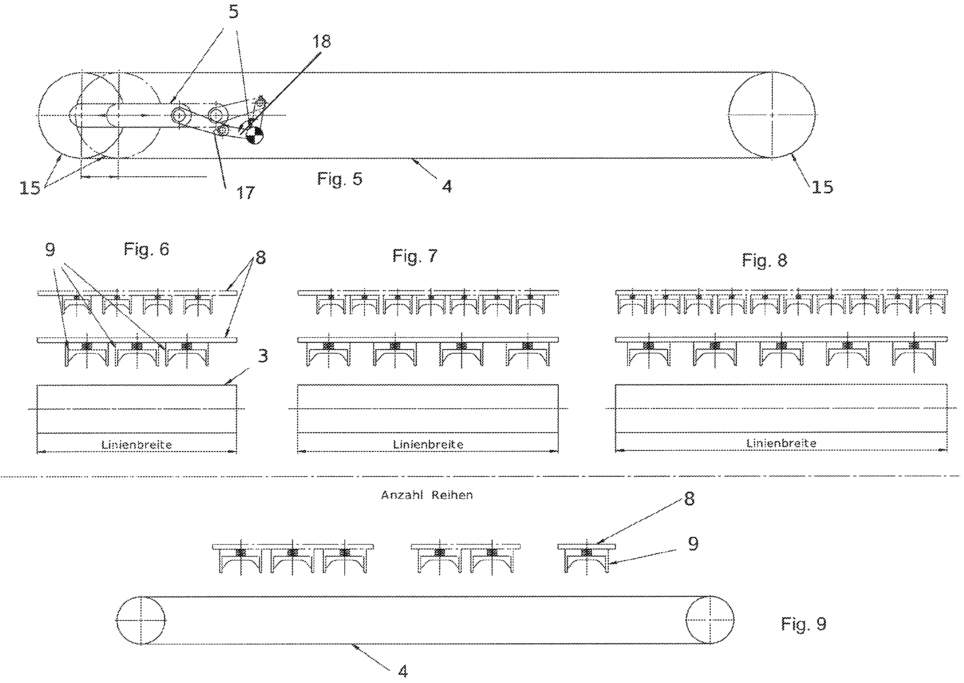

Fig. 1 zeigt eine Ausführungsform der erfindungsgemäßen Vorrichtung in isometrischer Ansicht, Fig. 2 zeigt die Vorrichtung gemäß Fig. 1 mit abgezogenem Wirkband, Fig. 3 zeigt die erfindungsgemäße Vorrichtung in Seitenansicht von der Bedienseite gesehen, Fig. 4 zeigt die Vorrichtung gemäß Fig. 1 bis 3 mit Ansicht in Richtung des Transportweges der Teigstücke auf dem Wirkband, Fig. 5 zeigt eine Detailansicht der Spannvorrichtung des Wirkbandes, Fig. 6 bis 8 zeigen unterschiedliche Ausführungsformen der erfindungsgemäßen Vorrichtung mit unterschiedlichen Anzahlen von Wirkwerkzeugen, und Fig. 9 zeigt eine Seitenansicht unterschiedlicher Ausführungsformen der Vorrichtung mit unterschiedlichen Anzahlen von Reihen der Wirkwerkzeuge.

In Fig. 1 ist eine bevorzugte Ausführungsform der erfindungsgemäßen Vorrichtung 10 in einer isometrischen Ansicht dargestellt. Die Vorrichtung 10 umfasst einen Rahmen 1, der als Gestell der Vorrichtung 10 dient. Die Vorrichtung umfasst einen Wirkschlitten 2, auf dem ein Wirkkopf 7 angeordnet ist. Auf dem Wirkkopf 7 ist weiters eine Wirkplatte 8 befestigt, die eine Anzahl von Wirkwerkzeugen - bei dieser Ausführungsform Wirkbecher 9 - zum Wirken von Teig aufweist. Bei dieser Ausführungsform sind jeweils fünf Wirkbecher 9 in einer Reihe nebeneinander angeordnet, wobei weiters drei Reihen von Wirkbechern 9 an der Wirkplatte 8 befestigt sind. Die Wirkplatte 8 ist mit dem Wirkkopf 7 lösbar verbunden, sodass die Wirkplatte 8 von dem Wirkkopf 7 bzw. dem Wirkschlitten 2 abgenommen und ausgetauscht werden kann. In Schwerkraftrichtung unter dem Wirkschlitten 2 ist ein Wirktisch 3 dem Wirkschlitten 2 gegenüberliegend angeordnet. Um den Wirktisch 3 ist ein Wirkband 4 geführt, auf dem Teigstücke aufgelegt werden können und entlang einer Transportrichtung, in Fig. 1. dargestellt durch einen Pfeil, befördert bzw. transportiert werden. Der Wirkschlitten 2 weist weiters einen Wirkantrieb 21 (Fig. 3) auf, mit dem die Wirkplatte 8 in eine linear oder kreisend oszillierende Bewegung versetzt wird und die Wirkbewegung vollzieht. Der Wirkschlitten 2 umfasst weiters eine Hubeinrichtung 14, mit der der Abstand der Wirkplatte 8 zum Wirktisch 3 bzw. zum Wirkband 4 verändert werden kann. Der Wirkschlitten 2 ist an einem Stellschlitten 12 (Fig. 4) befestigt, wobei der Stellschlitten 12 durch eine Antriebsvorrichtung entlang der Transportrichtung des Wirkbandes 4 mit diesem mitbewegt werden kann. Der Wirkschlitten 2 ist fliegend an dem Stellschlitten 12 gelagert, wodurch der Wirkschlitten 2 von dem Rahmen 1 absteht und von diesem einseitig, fliegend gelagert auskragt. Der Stellschlitten 12 ist dabei in Transportrichtung des Wirkbands 4 neben dem Wirktisch 3 an dem Rahmen 1 angeordnet, sodass der Wirkschlitten 2 von fünf Seiten, also ausgenommen von der Seite, an der der Wirkschlitten 2 an dem Stellschlitten 12 befestigt ist, zugänglich ist. Der Wirktisch 3 und das Wirkband 4 sind ebenfalls einseitig, also fliegend neben dem Wirktisch 3 bzw. neben diesem in der Transportrichtung des Wirkbands 4 an derselben Seite des Stellschlittens 12 am Rahmen 1 gelagert, wodurch die Vorrichtung 10 eine Bedienseite aufweist, die im Bezug auf die Transportrichtung des Wirkbands 4 dem Stellschlitten 12 gegenüber lieg und frei von Antriebslagerungs- und Rahmenteilen ist. An der Bedienseite ist es möglich, dass Arbeiter bzw. Bedienpersonal den Wirkvorgang überwachen sowie den Tausch von Wirkplatten 8 oder einzelnen Wirkwerkzeuge bzw. Wirkbechern 9 im Stillstand der Maschine vornehmen oder die Vorrichtung 10 einfach von der Bedienseite her reinigen und desinfizieren können. Der Rahmen 1 ist vollständig von einer Schutzverkleidung 13 umgeben, die auf deren Rückseite, also der den Wirkschlitten 2 abgewandten Seite, zu Wartungs- und Reinigungszwecken aufklappbar ist. Die Schutzverkleidung 13 ermöglicht, dass der Stellschlitten 12 zum Wirktisch 3 und dem Wirkband 4, an dem der Wirkvorgang vorgenommen wird, abgedichtet bzw. getrennt ist. So kann beispielsweise von den Teigstücken abfallendes Mehl, Teig oder Wasser nicht zu den Lagerungen bzw. den Führungen und Antriebselementen des Stellschlittens 12 gelangen, wodurch die Reinigung dieser Elemente entfällt bzw. vereinfacht wird. Umgekehrt wird ebenfalls verhindert, dass eventueller Abrieb in den Antriebselementen des Stellschlittens 12 bzw. in den Lagerungen sowie Öle oder andere Schmiermittel auf den Teig oder das Wirkband 4 tropfen oder spritzen.

Der Wirkschlitten 2 ragt aus dem Rahmen 1 heraus. Der Rahmen 1 weist eine Öffnung für den Wirkschlitten 2 zur Befestigung an dem Stellschlitten 12 auf (Fig. 4), die durch eine Dichteinheit 6 abgedeckt ist. Die Dichteinheit 6 ist bei dieser Ausführungsform durch eine Teleskopgleitplatte ausgebildet, kann aber alternativ auch durch eine einfache Gleitplatte Teleskopgleitplatte oder als geführtes Band oder als Zippverschluß oder als kolbenstangenloser Pneumatikzylinder oder andere aus dem Stand der Technik bekannte flexible oder bewegbare Abdeckelemente ausgebildet sein. Durch die Dichteinheit 6 kann der Wirkschlitten 2 entlang des Verfahrwegs bzw. entlang der Transportrichtung des Wirkbands 4 verstellt werden und dennoch eine zuverlässige und hygienisch einwandfreie Abdeckung bzw. Trennung der Maschinenteile zu den Teigen bzw. Bearbeitungselementen erreicht werden.

Wie in Fig. 2 dargestellt, kann durch die fliegende Lagerung des Wirktischs 3 das Wirkband 4 einfach von dem Wirktisch 3 bzw. von Umlenkrollen 15, die die Umlenkung des Wirkbands 4 erreichen, herabgenommen werden. Die Umlenkrollen 15 sind jeweils an dem Rahmen 1 ebenfalls fliegend gelagert und sind am äußersten Ende des Wirktischs 3 in Transportrichtung des Wirkbands 4 jeweils vor bzw. nach dem Wirktisch 3 angeordnet. Die Umlenkrollen 15 bewirken die Umlenkung des Wirkbands 4, wobei eine oder alle Umlenkrollen 15 angetrieben sein können. Der Antrieb der Umlenkrollen 15 und deren Lagerung ist ebenfalls in dem Rahmen 1 angeordnet und durch die Schutzverkleidung 13 von dem Wirkbereich getrennt bzw. zu diesen abgedichtet.

In Fig. 5 ist eine Detailansicht der Umlenkrollen 15 mit dem darauf angeordneten Wirkband 4 dargestellt. Das Wirkband 4 ist dabei um die Umlenkrollen 15 herumgeführt und wird bei Betätigung des Antriebes des Wirkbandes 4 um die Umlenkrollen 15 bewegt, wobei auf dem Wirkband 4 liegender Teig in Transportrichtung des Wirkbands 4 mitbewegt wird. Die Vorrichtung 10 weist weiters eine Schnellspannvorrichtung 5 auf, die bei dieser Ausführungsform als Kniehebel ausgebildet ist. Mit der Schnellspannvorrichtung 5 wird die in Transportrichtung des Wirkbands 4 hinterste Rolle parallel zum Wirkband 4 gespannt bzw. entspannt und verstellt. Die Schnellspannvorrichtung 5 weist einen Kniehebel 17 auf, der um einen Spannhebel 18 geschwenkt werden kann und somit gestreckt bzw. gebeugt wird. Durch Streckung des Kniehebels 17 wird die Umlenkrolle 15 in Transportrichtung des Wirkbands 4 verstellt und bei Streckung das Wirkband 4 durch die Umlenkrolle 15 gespannt bzw. bei Beugen des Kniehebels 17 entspannt. Durch Verstellung der Schnellspannvorrichtung 5 ist es einfach möglich, das Wirkband 4 zu entspannen und von der Vorrichtung 10 durch die einseitige Lagerung der Umlenkrollen 15 herabzunehmen. So kann beispielsweise bei der Reinigung der Vorrichtung 10 das Wirkband 4 von der Vorrichtung 10 herabgenommen werden und die einzelnen Teile, also die Umlenkrollen 15, der Wirktisch 3, und andere Teile besonders effektiv und einfach gereinigt werden. Weiters ermöglicht es bei Wechsel der Teige bzw. des Produktionsprozesses, ein jeweils für die unterschiedlichen Produkte, Teiggewichte, Teilungen und Reihigkeiten je ein spezifisches Wirkband 4 aufzusetzen und somit mehrere bzw. unterschiedliche Teige mit einer Vorrichtung 10 bearbeiten zu können. Der Spannhebel 18 erstreckt sich zur Bedienseite der Vorrichtung 10 und kann einfach manuell oder maschinell von der Bedienseite aus manuell betätigt werden.

In den Fig. 6 bis 9 sind unterschiedliche Anordnungen von Wirkwerkzeugen bzw. Wirkbechern 9 dargestellt. Die Umlenkrollen 15, der Wirktisch 3 und das Wirkband 4 können vollständig durch die fliegende Lagerung von der Vorrichtung 10 herabgenommen werden, wodurch es möglich ist, wie beispielsweise in Fig. 6, 7 und 8 dargestellt, unterschiedliche Linienbreiten mit derselben Vorrichtung 10 durch Wechsel der Umlenkrollen 15, des Wirkbands 4 und des Wirktischs 3 zu bedienen. Die Wirkplatte 8 und die auf der Wirkplatte 8 angeordneten Wirkbecher 9 sind jeweils von der Vorrichtung 10 herabnehmbar an dieser angeordnet, sodass mit derselben Vorrichtung 10 unterschiedliche Anzahlen von Reihen und Wirkbechern 9 innerhalb der Reihen auf dem Wirkschlitten 2 bzw. dem Wirkkopf 7 angeordnet werden können. Die Fig. 6 bis 8 zeigen dabei mehrere Möglichkeiten, bei einer Linienbreite unterschiedlich große Wirkbecher 9 anzuordnen, die jeweils in Bezug auf die Breite des Wirkbands 4 bzw. des Wirktischs 3 nebeneinander angeordnet sind. Weiters ist es möglich, durch die lösbare Ausbildung der Wirkplatte 8 an dem Wirkkopf 7 bzw. den Wirkschlitten 2 eine unterschiedliche Anzahl von Reihen, die in Transportrichtung des Wirkbands 4 hintereinander liegen, an dem Wirkschlitten 2 anzuordnen. Derartige unterschiedliche Ausbildungen zeigt Fig. 9. So ist es beispielsweise denkbar, dass der Wirkschlitten 2 jeweils nur eine Reihe von Wirkbechern 9 oder mehrere Reihen von Wirkbechern 9 aufweist, die in Transportrichtung des Wirkbandes hintereinander angeordnet sind. Ebenfalls kann die Anzahl der Wirkbecher 9 innerhalb der unterschiedlichen Reihen variieren, wobei z.B. in der ersten Reihe nur zwei Wirkbecher 9 und in der zweiten und dritten Reihe drei oder vier Wirkbecher 9 oder auch mehr angeordnet sein können. Fig. 3 zeigt eine schematisch dargestellte Schnittansicht durch den Wirkschlitten 2 mit Ansicht in Richtung der Breite des Wirktischs 3. Der Wirkschlitten 2 umfasst einen Wirkantrieb 21, der als Elektromotor ausgebildet ist, an dem über eine Welle ein Exzenterantrieb 25 angeordnet ist. Bei Betrieb des Wirkantriebs 21 werden die Wirkplatte 8 und damit die Wirkbecher 9 in eine drehende, oszillierende Bewegung versetzt, wodurch in den Wirkbechern 9 bzw. zwischen den Wirkbechern 9 und dem Wirkband 4 angeordnete Teigstücke die typische Wirkbewegung erfahren. In Fig. 4 ist eine weitere Ausführungsform der erfindungsgemäßen Vorrichtung 10 in einer schematischen Schnittansicht quer zur Transportrichtung des Wirkbands 4, also entlang der Breite des Wirktisches 3, dargestellt. Der Wirkschlitten 2 umfasst, wie in Fig. 3 schematisch dargestellt, einen Wirkantrieb 21, der über einen Riemen oder ein Gestänge zwei Exzenter 25 in Rotation versetzt. An den Enden der Exzenter 25 ist jeweils die Wirkplatte 8 mit den Wirkbechern 9 angeordnet, die durch Betätigung des Wirkantriebs 21 die typische Wirkbewegung vollziehen. Der Wirkschlitten 2 ist durch eine Öffnung des Rahmens 1 durchgeführt und an dem Stellschlitten 12 angeordnet. Der Stellschlitten 12 umfasst zwei Führungen 26, über die der Stellschlitten 12 und damit der Wirkschlitten 2 an dem Rahmen 1 abgestützt und geführt sind. Weiters weist die Vorrichtung 10 eine Kugelspindel 27 auf, mit der die Verstellbewegung des Stellschlittens entlang der Führungen 26 in Transportrichtung des Wirkbands 4 erzeugt wird. Die Öffnung des Rahmens 1 bzw. der Schutzverkleidung 13 ist durch eine Dichteinheit 6, die als Gleitplatte ausgebildet ist, abgedichtet.

Alternativ kann vorgesehen sein, dass der Stellschlitten 12 bzw. der Wirkschlitten 2 an Stelle der Kugelspindel 27 mittels eines Liniearantriebes, Ketten- oder Riementriebs in Transportrichtung des Wirkbands 4 verstellbar ist.

In einer optionalen Ausführungsform weist die Vorrichtung 10 eine Synchronisiereinheit auf, mit der die Verfahrgeschwindigkeit des Stellschlittens 12 und/oder des Wirkschlittens 2 an die Transportgeschwindigkeit des Wirkbands 4 angeglichen wird. So kann beispielsweise die Verfahrgeschwindigkeit des Stellschlittens 12 und/oder des Wirkschlittens 2 mit der Transportgeschwindigkeit des Wirkbands 4 synchronisiert oder eben gezielt asynchron betrieben werden. Die Synchronisiereinheit kann beispielsweise Sensoren aufweisen, mit denen der Schlupf des Wirkbandes 4 um die Umlenkrollen 15 erfasst wird und der Schlupf des Wirkbandes 4 somit durch den Antrieb des Stellschlittens 12 kompensiert werden kann. Derartige Indikatoren zur Erfassung des Bandschlupfs können beispielsweise durch Metall im Wirkband und dazu darunter angeordnete, geeignete Sensoren erfasst werden, wodurch ermittelt werden kann wie viel der Stellschlitten 12 bzw. das Wirkband 2 in Relation zum Wirkband 4 nachgeregelt bzw. mitbewegt werden müssen.

Weiters kann vorgesehen sein, dass für die Vorrichtung 10 unterschiedliche Wirkbänder 4 für einzelne Anwendungen breitegestellt werden. Die Wirkbänder 4 sind mit in oder auf den Wirkbändern 4 angeordneten Indikatoren ausgestattet, die Signale an die Sensoren weitergeben, um den Synchronlauf des über dem Wirkband 4 befindlichen Wirkkopfes 7 mit dem jeweiligen Wirkband 4 ohne genaue Bestimmung der Positionen des Wirkkopfes 7 zu gewährleisten. So kann beispielsweise die Synchronisierung automatisch erfolgen, sobald die Anlage gestartet wird.

## Patentansprüche

1. Vorrichtung (10) zum Rundwirken von Teigstücken umfassend einen Rahmen (1), einen Wirkschlitten (2) mit einem Wirkkopf (7) auf dem eine, insbesondere wechselbare, Wirkplatte (8) angeordnet ist,
wobei die Wirkplatte (8) eine Anzahl von Wirkwerkzeugen, insbesondere Wirkbecher (9), zum Wirken von Teig aufweist,
wobei die Vorrichtung (10) einen dem Wirkschlitten (2) gegenüberliegenden Wirktisch (3) aufweist, wobei der Wirktisch (3) in Schwerkraftrichtung unter dem Wirkschlitten (2) angeordnet ist,
wobei um den Wirktisch (3) ein Wirkband (4) geführt ist auf dem die Teigstücke auflegbar und entlang einer Transportrichtung beförderbar sind,
wobei der Wirkschlitten (2) einen Wirkantrieb (21) aufweist mit dem die Wirkplatte (8) oszillierend bewegbar ist,
wobei der Wirkschlitten (2) eine Hubeinrichtung (14) zur Veränderung des Abstands zwischen dem Wirktisch (3) und den Wirkwerkzeugen aufweist,
und wobei die Vorrichtung (10) einen Stellschlitten (12) umfasst an dem der Wirkschlitten (2) angeordnet ist, wobei der Stellschlitten (12) derart bewegbar ausgebildet ist, dass der Wirkschlitten (2) mit dem Wirkband (4) mitbewegbar ist,
wobei der Wirkschlitten (2) fliegend an dem Stellschlitten (12) gelagert ist,
**dadurch gekennzeichnet,**
**dass** der Stellschlitten (12) und der Wirktisch (3) und das Wirkband (4) in und/oder an dem Rahmen (1) derart einseitig fliegend in Transportrichtung des Wirkbandes (4) neben dem Wirktisch (3) befestigt, angeordnet und/oder gelagert sind, dass der Wirkschlitten (2), der Wirktisch (3) und das Wirkband (4) eine dem Rahmen (1) gegenüberliegende Bedienseite aufweisen, die frei vom Rahmen (1) und Lagerungen ist und sodass der Wirktisch (3) und das Wirkband (4) und der Wirkschlitten (2) an der Bedienseite für Bedienpersonal frei zugänglich ist.

2. Vorrichtung (10) nach Anspruch 1, **dadurch gekennzeichnet**, das der Rahmen (1), insbesondere mittels einer, vorzugsweise aufklappbaren, Schutzverkleidung (13), derart ausgebildet ist, dass der Stellschlitten (12) zum Wirktisch (3) und dem Wirkband (4) abgeschlossen, insbesondere abgedichtet, ist, sodass Schmutz, Mehl und/oder Wasser nicht vom Wirkband (4) zum Stellschlitten (12) und umgekehrt keine Fremdkörper auf die Produkte gelangen können.

3. Vorrichtung (10) nach Anspruch 2, **dadurch gekennzeichnet, dass** der Wirkschlitten (2) aus dem Rahmen (1) herausragt und dass die Öffnung des Rahmens (1), an der der Wirkschlitten (2) aus dem Rahmen (1) ragt mit einer Dichteinheit (6) abgedeckt ist, wobei die Dichteinheit (6) insbesondere als Gleitplatte oder Teleskopgleitplatte oder als geführtes Band oder als Zippverschluß oder als kolbenstangenloser Pneumatikzylinder ausgebildet ist.

4. Vorrichtung (10) nach einem der vorangehenden Ansprüche, **dadurch gekennzeichnet, dass** die Vorrichtung (10) eine Anzahl von Umlenkrollen (15) aufweist um die das Wirkband (4) geführt ist, dass die Umlenkrollen (15) in und/oder an dem Rahmen (1) einseitig fliegend in Transportrichtung des Wirkbandes (4) angeordnet und/oder gelagert sind, wobei der Abstand zwischen den Umlenkrollen (15) derart mittels einer Schnellspannvorrichtung (5) veränderbar ist, dass das Wirkband (4) gespannt oder entspannt werden kann.

5. Vorrichtung nach Anspruch 4, **dadurch gekennzeichnet, dass** die Schnellspannvorrichtung (5) einen Kniehebel (17) aufweist, wobei der Kniehebel (17) einen Spannhebel (18) aufweist mit dem der Kniehebel (17) gebeugt oder gestreckt werden kann, wobei der Spannhebel (18) insbesondere derart angeordnet ist, dass dieser von der Bedienseite manuell betätigbar ist, wobei der Spannhebel (18) derart ausgebildet ist, dass mittels der Schnellentspannvorrichtung (5) das Wechseln von unterschiedlichen Wirkbänder (4) für die unterschiedliche Produkte, Teiggewichte, Teilungen und Reihigkeiten ohne Werkzeug möglich ist.

6. Vorrichtung (10) nach einem der vorangehenden Ansprüche, **dadurch gekennzeichnet, dass** die Vorrichtung (10) eine Kugelspindel, einen Linearantriebs, Ketten- und/oder Riementrieb aufweist mit dem der Stellschlitten (12) entlang der Transportrichtung des Wirkbandes (4) vestellbar ist.

7. Vorrichtung (10) nach einem der vorangehenden Ansprüche, **dadurch gekennzeichnet, dass** die Vorrichtung (10) eine Synchronisiereinheit aufweist mit der die Verfahrgeschwindigkeit des Stellschlittens (12) und/oder des Wirkschlittens (2) an die Transportgeschwindigkeit des Wirkbandes (4) angleichbar ist

8. Vorrichtung (10) nach einem der vorangehenden Ansprüche, **dadurch gekennzeichnet, dass** die Wirkwerkzeuge wechselbar am Wirkkopf (7) angeordnet sind.

9. Vorrichtung (10) nach einem der vorangehenden Ansprüche, **dadurch gekennzeichnet, dass** die Vorrichtung (10) eine Anzahl von Wirkwerkzeugen, insbesondere Wirkbecher (9), aufweist, wobei die Wirkwerkzeuge in einer Anzahl von Reihen angeordnet sind, wobei in den Reihen jeweils eine Anzahl von Wirkwerkzeugen quer zur Transportrichtung des Wirkbandes (4) nebeneinander angeordnet sind.

10. Vorrichtung (10) nach einem der vorangehenden Ansprüche, **dadurch gekennzeichnet, dass** unterschiedliche Wirkbänder (4) für einzelne Anwendungen breitegestellt werden, wobei mit, in oder auf den Wirkbändern (4) angeordneten, Indikatoren Signale an die Sensoren weitergeben werden, um den Synchronlauf des darüber befindlichen Wirkkopfes (7) mit dem jeweiligen Wirkband (4) zu gewährleisten.

## Claims

1. Device (10) for rounding bakery products comprising a frame (1), a kneading carriage (2) having a kneading head (7) on which an, in particular exchangeable, kneading plate (8) is arranged,
wherein the kneading plate (8) has a number of kneading tools, in particular kneading cups (9), for kneading dough,
wherein the device (10) has a kneading table (3) situated opposite to the kneading carriage (2), wherein the kneading table (3) is arranged in the direction of gravity below the kneading carriage (2),
wherein a kneading belt (4) is guided around the kneading table (3), on which kneading belt the dough pieces can be laid and conveyed along a transport direction,
wherein the kneading carriage (2) has a kneading drive (21) with which the kneading plate (8) is movable in an oscillating manner,
wherein the kneading carriage (2) has a lifting device (14) for changing the spacing between the kneading table (3) and the kneading tools,
and wherein the device (10) has an adjusting carriage (12) at which the kneading carriage (2) is arranged, wherein the adjusting carriage (12) is designed to be movable such that the kneading carriage (2) can be moved together with the kneading belt (4),
wherein the kneading carriage (2) is mounted in cantilever fashion on the adjusting carriage (12),
**characterised in that** the adjusting carriage (12) and the kneading table (3) and the kneading belt (4) are fixed, arranged and/or mounted in and/or against the frame (1) in a one-sided cantilever fashion in transport direction of the kneading belt (4) adjacent to the kneading table (3), such that the kneading carriage (2), the kneading table (3) and the kneading belt (4) have an operating side opposite to the frame (1) which is free of frame (1) and mountings and such that the kneading table (3) and the kneading belt (4) and the kneading carriage (2) is freely accessible at the operating side for operating personnel.

2. Device (10) according to claim 1, **characterised in that** the frame (1) is formed in particular by means of a, preferably unfoldable, protective cladding (13), such that the adjusting carriage (12) is closed off, in particular sealed, in relation to the kneading table (3) and the kneading belt (4), such that dirt, flour and/or water cannot reach the adjusting carriage (12) from the kneading belt (4), and, vice versa, that no foreign bodies can reach the products.

3. Device (10) according to claim 2, **characterised in that** the kneading carriage (2) protrudes from the frame (1) and that the opening of the frame (1) at which the kneading carriage (2) protrudes from the frame (1) is covered using a sealing unit (6), wherein the sealing unit (6) is designed in particular as a sliding plate or a telescopically sliding plate or as a guided belt or as a zipper or as a piston rod-free pneumatic cylinder.

4. Device (10) according to any of the preceding claims, **characterised in that** the device (10) has a number of diversion rollers (15) about which the kneading belt (4) is guided, that the diversion rollers (15) are arranged and/or mounted in and/or against the frame (1) in a one-sided cantilever fashion in transport direction of the kneading belt (4), wherein the spacing between the diversion rollers (15) can be changed by means of a quick-release device (5) such that the kneading belt (4) can be tensioned or relaxed.

5. Device according to claim 4, **characterised in that** the quick-release device (5) has a knee lever (17), wherein the knee lever (17) has a tension lever (18) with which the knee lever (17) can be bent or straightened, wherein the tension lever (18) is arranged in particular such that it can be operated manually from the operating side, wherein the tension lever (18) is configured such that by means of the quick-release device (5) it is possible to change different kneading belts (4) for the different products, dough weights, distributions and ranges without tools.

6. Device (10) according to any of the preceding claims, **characterised in that** the device (10) has a ball spindle, a linear drive, chain and/or belt drive with which the adjusting carriage (12) is adjustable along the transport direction of the kneading belt (4).

7. Device (10) according to any of the preceding claims, **characterised in that** the device (10) has a synchronisation unit with which the motion speed of the adjusting carriage (12) and/or of the kneading carriage (2) can be aligned with the transport speed of the kneading belt (4).

8. Device (10) according to any of the preceding claims **characterised in that** the kneading tools are arranged at the kneading head (7) so that they can be exchanged.

9. Device (10) according to any of the preceding claims, **characterised in that** the device (10) has a number of kneading tools, in particular kneading cups (9), wherein the kneading tools are arranged in a number of roads, wherein in the rows in each case a number of kneading tools are arranged next to one another and perpendicularly to the transport direction of the kneading belt (4).

10. Device (10) according to any of the preceding claims, **characterised in that** different kneading belts (4) are provided for individual applications, wherein, by means of indicators arranged in or on the kneading belts (4), signals are passed to the sensors, in order to guarantee the synchronised running of the kneading head (7) located above a respective kneading belt (4) with said kneading belt.

## Revendications

1. Dispositif (10) pour le façonnage de morceaux de pâte comprenant un cadre (1), un chariot de façonnage (2) avec une tête de façonnage (7) sur laquelle est agencée une plaque de façonnage (8), en particulier interchangeable,
dans lequel la plaque de façonnage (8) présente un certain nombre d'outils de façonnage, en particulier des godets de façonnage (9), pour façonner la pâte,
dans lequel le dispositif (10) présente une table de façonnage (3) située à l'opposé du chariot de façonnage (2), dans lequel la table de façonnage (3) est agencée sous le chariot de façonnage (2) dans la direction de la force de gravité,
dans lequel une bande de façonnage (4) est guidée autour de la table de façonnage (3), sur laquelle les morceaux de pâte peuvent être posés et transportés le long d'une direction de transport,
dans lequel le chariot de façonnage (2) présente un entraînement de façonnage (21) avec lequel la plaque de façonnage (8) peut être déplacée de manière oscillante,
dans lequel le chariot de façonnage (2) présente un dispositif de levage (14) pour modifier la distance entre la table de façonnage (3) et les outils de façonnage,
et dans lequel le dispositif (10) comprend un chariot de réglage (12) sur lequel est agencé le chariot de façonnage (2), dans lequel le chariot de réglage (12) est réalisé de manière mobile de sorte que le chariot de façonnage (2) puisse être déplacé avec la bande de façonnage (4),
dans lequel le chariot de façonnage (2) est monté flottant sur le chariot de réglage (12),
**caractérisé en ce que** le chariot de réglage (12) et la table de façonnage (3) et la bande de façonnage (4) sont fixés, agencés et/ou logés dans et/ou sur le cadre (1) en porte-à-faux sur un côté dans la direction de transport de la bande de façonnage (4) à côté de la table de façonnage (3), **en ce que** le chariot de façonnage (2), la table de façonnage (3) et la bande de façonnage (4) présentent un côté de commande opposé au cadre (1), qui est libre par rapport au cadre (1) et aux paliers et de sorte que la table de façonnage (3) et la bande de façonnage (4) et le chariot de façonnage (2) sont librement accessibles au personnel de service sur le côté de commande.

2. Dispositif (10) selon la revendication 1, **caractérisé en ce que** le cadre (1) est réalisé, en particulier au moyen d'un revêtement de protection (13), de préférence relevable, de sorte que le chariot de réglage (12) est fermé, en particulier rendu étanche, par rapport à la table de façonnage (3) et à la bande de façonnage (4), de sorte que la saleté, la farine et/ou l'eau ne peuvent pas passer de la bande de façonnage (4) au chariot de réglage (12) et inversement, aucun corps étranger ne peut arriver sur les produits.

3. Dispositif (10) selon la revendication 2, **caractérisé en ce que** le chariot de façonnage (2) dépasse du cadre (1) et **en ce que** l'ouverture du cadre (1) au niveau de laquelle le chariot de façonnage (2) dépasse du cadre (1) est recouverte d'une unité d'étanchéité (6), dans lequel l'unité d'étanchéité (6) est réalisée en particulier sous forme de plaque de glissement ou de plaque de glissement télescopique ou de bande guidée ou de fermeture à glissière ou de vérin pneumatique sans tige de piston.

4. Dispositif (10) selon l'une quelconque des revendications précédentes, **caractérisé en ce que** le dispositif (10) présente un certain nombre de poulies de renvoi (15) autour desquelles la bande de façonnage (4) est guidée, **en ce que** les poulies de renvoi (15) sont agencées et/ou montées dans et/ou sur le cadre (1) en porte-à-faux sur un côté dans la direction de transport de la bande de façonnage (4), dans lequel la distance entre les poulies de renvoi (15) peut être modifiée au moyen d'un dispositif de serrage rapide (5) de sorte que la bande de façonnage (4) peut être tendue ou détendue.

5. Dispositif selon la revendication 4, **caractérisé en ce que** le dispositif de serrage rapide (5) présente un levier à genouillère (17), dans lequel le levier à genouillère (17) présente un levier de serrage (18) avec lequel le levier à genouillère (17) peut être fléchi ou étiré, dans lequel le levier de serrage (18) est en particulier agencé de sorte, que celui-ci peut être actionné manuellement du côté de commande, dans lequel le levier de serrage (18) est réalisé de sorte qu'au moyen du dispositif de serrage rapide (5), le changement de différentes bandes de façonnage (4) pour les différents produits, poids de pâte, divisions et rangées est possible sans outil.

6. Dispositif (10) selon l'une quelconque des revendications précédentes, **caractérisé en ce que** le dispositif (10) présente une broche à billes, un entraînement linéaire, un entraînement par chaîne et/ou par courroie avec lequel le chariot de réglage (12) peut être déplacé le long de la direction de transport de la bande de façonnage (4).

7. Dispositif (10) selon l'une quelconque des revendications précédentes, **caractérisé en ce que** le dispositif (10) présente une unité de synchronisation avec laquelle la vitesse de déplacement du chariot de réglage (12) et/ou du chariot de façonnage (2) peut être adaptée à la vitesse de transport de la bande de façonnage (4).

8. Dispositif (10) selon l'une quelconque des revendications précédentes, **caractérisé en ce que** les outils de façonnage sont agencés de manière interchangeable sur la tête de façonnage (7).

9. Dispositif (10) selon l'une quelconque des revendications précédentes, **caractérisé en ce que** le dispositif (10) présente un certain nombre d'outils de façonnage, en particulier des godets de façonnage (9), dans lequel les outils de façonnage sont agencés en un certain nombre de rangées, dans lequel, dans les rangées, un certain nombre d'outils de façonnage sont respectivement agencés les uns à côté des autres transversalement à la direction de transport de la bande de façonnage (4).

10. Dispositif (10) selon l'une quelconque des revendications précédentes, **caractérisé en ce que** différentes bandes de façonnage (4) sont étalées pour des applications individuelles, dans lequel des signaux sont transmis aux capteurs à l'aide d'indicateurs agencés dans ou sur les bandes de façonnage (4), afin de garantir le fonctionnement synchrone de la tête de façonnage (7) située au-dessus avec la bande de façonnage (4) respective.
